# EUROPÄISCHE PATENTSCHRIFT

(11) **EP 0 935 739 B1**
(45) Veröffentlichungstag und Bekanntmachung des Hinweises auf die Patenterteilung: **13.03.2002**
(21) Anmeldenummer: 97947686.8
(22) Anmeldetag: 17.10.1997
(51) Int. Cl.: G01C 21/20, G01C 21/16

(54) **ORTUNGSSENSOR MIT EINEM SATELLITENEMPFÄNGER ZUR POSITIONSBESTIMMUNG**
POSITION DETECTOR WITH SATELLITE SIGNAL RECEIVER
DETECTEUR DE POSITION A RECEPTEUR DE SIGNAUX DE SATELLITE

(30) Priorität: 04.11.1996 DE 19645394
(43) Veröffentlichungstag der Anmeldung: 18.08.1999
(73) Patentinhaber: ROBERT BOSCH GMBH, 70442 Stuttgart (DE)
(72) Erfinder: BODE, Friedrich-Wilhelm, D-31552 Apelern (DE); TANNEBERGER, Volkmar, D-31139 Hildesheim (DE)
(86) Internationale Anmeldenummer: DE9702402
(87) Internationale Veröffentlichungsnummer: WO9820304

(56) Entgegenhaltungen:
- US-A- 5 075 693
- STURZA M A ET AL: "EMBEDDED GPS SOLVES THE INSTALLATION DILEMMA" NAVIGATION INTO THE 21ST. CENTURY, KISSIMMEE, NOV. 29 - DEC. 2, 1988, Nr. 1988, 29.November 1988, INSTITUTE OF ELECTRICAL AND ELECTRONICS ENGINEERS, Seiten 374-380, XP000043850
- "AIDED INERTIAL LAND NAVIGATION SYSTEM (ILANA) WITH A MINIMUM SET OF INERTIAL SENSORS" POSITION LOCATION AND NAVIGATION SYMPOSIUM (PLANS), LAS VEGAS, APR. 11 - 15, 1994, Nr. -, 11.April 1994, INSTITUTE OF ELECTRICAL AND ELECTRONICS ENGINEERS, Seiten 284-291, XP000489353
- PETERS M A G: "DEVELOPMENT OF A TRN/INS/GPS INTEGRATED NAVIGATION SYSTEM" PROCEEDINGS OF THE DIGITAL AVIONICS SYSTEMS CONFERENCE, LOS ANGELES, OCT. 14 - 17, 1991, Nr. CONF. 10, 14.Oktober 1991, INSTITUTE OF ELECTRICAL AND ELECTRONICS ENGINEERS, Seiten 6-11, XP000309219

## Beschreibung

### Stand der Technik

Die Erfindung geht aus von einem Ortungssensor mit einem Satellitenempfänger zur Positionsbestimmung nach der Gattung des Hauptanspruchs. Es ist schon bekannt, für die Standortbestimmung insbesondere eines Kraftfahrzeuges ein Ortungs- und Navigationssystem zu verwenden. An das Navigationssystem sind häufig Sensoren zur Bestimmung der Fahrtrichtung und der zurückgelegten Wegstrecke angeschlossen. Zur Bestimmung einer absoluten Position des Kraftfahrzeugs kann auch ein Satellitenempfänger verwendet werden, wie er beispielsweise durch das GPS-System (Global Positioning System) bekannt ist.

Die Montage der Richtungs- und Wegsensoren am Kraftfahrzeug sind jedoch relativ aufwendig. Andererseits ist die Positionsbestimmung mit Hilfe des GPS-Empfängers relativ ungenau, so daß in einem engmaschigen Straßennetz ein genauer Standort nicht immer bestimmt werden kann. Hinzukommt, daß in bebauten Stadtgebieten nicht genügend GPS-Satelliten empfangen werden können, so daß die Standortbestimmung auf der Grundlage des Satellitenempfangs nicht immer zufriedenstellend ist. Darüber hinaus müssen die Signale des Satellitenempfängers als auch des Richtungs- und Wegsensors mit entsprechenden Filtern aufbereitet werden, so daß die Standortbestimmung nicht nur unzuverlässig, sondern auch aufwendig ist.

Aus dem Artikel "Aided Inertial Land Navigation System with a Minimum Set of Inertial Sensors", Peter Daum et al., IEEE 11.04.1994, XP 000489353, ist eine Navigationseinheit beschrieben, die über ein Ortungsmodul, eine Spannungsversorgung und einen GPS-Empfänger verfügt. Das Ortungsmodul kann z.B. einen Gyrokreisel und zwei Beschleunigungsmesser aufweisen. Zur Positionsbestimmung wird eine Mischung der verschiedenen Sensordaten durchgeführt. Aus der Schrift von Mark Sturza et al., "Embedded GPS Solves The Installation Dilemma", IEEE 29.11.1988, XP 000043850, ist ein Navigationssystem für Flugzeuge bekannt, bei der eine Positionsbestimmung mittels GPS und mittels Sensoren in einem System integriert ist. Die Daten des GPS-Empfängers werden auf einen Kalman-Filter gegeben.

### Vorteile der Erfindung

Der erfindungsgemäße Ortungssensor mit den kennzeichnenden Merkmalen des Hauptanspruchs hat demgegenüber den Vorteil, daß durch die Anordnung der Sensoren im gleichen Gehäuse der Ortungssensor sehr kompakt aufgebaut werden kann. Dadurch verringert sich vorteilhaft nicht nur der Montageaufwand, sondern auch die Herstellungskosten. Besonders vorteilhaft ist, daß durch die kompakte Bauweise einzelne Komponenten für die Auswertung der Signale, beispielsweise Filter, mehrfach genutzt werden können, so daß sich der Fertigungsaufwand für den Ortungssensor weiter reduziert. Durch das kompatible Datenformat am Ausgang des Ortungssensors ist auch ein Ersatz herkömmlicher Satellitenempfänger möglich.

Durch die Zusammenschaltung der einzelnen Sensoren auf ein gemeinsames Positionsfilter werden weitere Baugruppen gespart, die sonst für jeden einzelnen Sensor erforderlich wären. Besonders günstig ist dabei, dass die Sensorsignale mit einem Prioritätsfaktor gewichtet werden, so dass beispielsweise die Positionsbestimmung mit dem GPS-Empfänger die höchste Priorität besitzt, so lange genügend Satellitensignale empfangbar sind. Sind dagegen beispielsweise in einem Tunnel keine Satellitensignale mehr empfangbar, erhält der Wegsensor und der Richtungssensor die höchste Priorität. Diese Prioritäten werden dann solange beibehalten, bis wieder die Satellitensignale in ausreichender Qualität empfangbar sind.

Durch die in den abhängigen Ansprüchen aufgeführten Maßnahmen sind vorteilhafte Weiterbildungen und Verbesserungen des im Hauptanspruch angegebenen Ortungssensors möglich. Besonders vorteilhaft ist, daß als Satellitenempfänger ein GPS- und/oder GLONASS-System verwendet wird, da diese Systeme bereits installiert sind und teilweise für eine zivile Nutzung freigegeben sind.

Die Verwendung eines oder mehrerer Beschleunigungssensoren und/oder eines Drehratensensors (Gyro-Sensor) als Wegsensor bzw. Richtungssensor erscheint deswegen günstig, weil diese Sensoren unabhängig von Signalgebern des Kraftfahrzeugs in das Gehäuse des Ortungssensors installierbar sind. Dadurch können zusätzliche externe Fahrzeuginstallationen und Anschlüsse gespart werden.

Durch die zusätzliche Verwendung eines barometrischen Höhenmessers oder eines Temperatursensors kann die Genauigkeit der Positionsbestimmung überwacht und verbessert werden. Da beim Empfang von genügend GPS-Satelliten auch eine Höhenbestimmung möglich ist, ist durch Vergleich mit den Meßwerten des barometrischen Höhenmessers die Positionsbestimmung kalibrierbar. Da die Arbeitsgenauigkeit der verwendeten Bauteile auch von der Umgebungstemperatur abhängt, können diese Fehler mit Hilfe des Temperatursensors vorteilhaft kompensiert werden.

Um auch bei sehr ungünstigen Empfangsbedingungen der Sensorsignale eine Positionsbestimmung zu ermöglichen oder auch zum Kalibrieren der Sensoren, beispielsweise des Beschleunigungssensors, ist vorteilhaft der Anschluß eines Tachogebers vorgesehen. Der Tachogeber kann dabei ein am Fahrzeug vorhandener Signalgeber für eine zurückgelegte Wegstrecke sein, dessen Signale zusätzlich für die Kalibrierung des Beschleunigungssensors verwendbar sind.

Besonders vorteilhaft ist, daß als Positionsfilter ein Kalmanfilter vorgesehen ist. Bei diesem Filter kompensieren sich die Fehler der einzelnen Sensoren gegensinnig, so daß dadurch das Ortungsergebnis verbessert wird.

### Zeichnung

Ein Ausführungsbeispiel der Erfindung ist in der Zeichnung dargestellt und in der nachfolgenden Beschreibung näher erläutert. Es zeigen:
Figur 1 ein Blockschaltbild eines bekannten Ortungs- und Navigationssystems und
Figur 2 zeigt ein erfindungsgemäßes Ausführungsbeispiel.

### Beschreibung des Ausführungsbeispiels

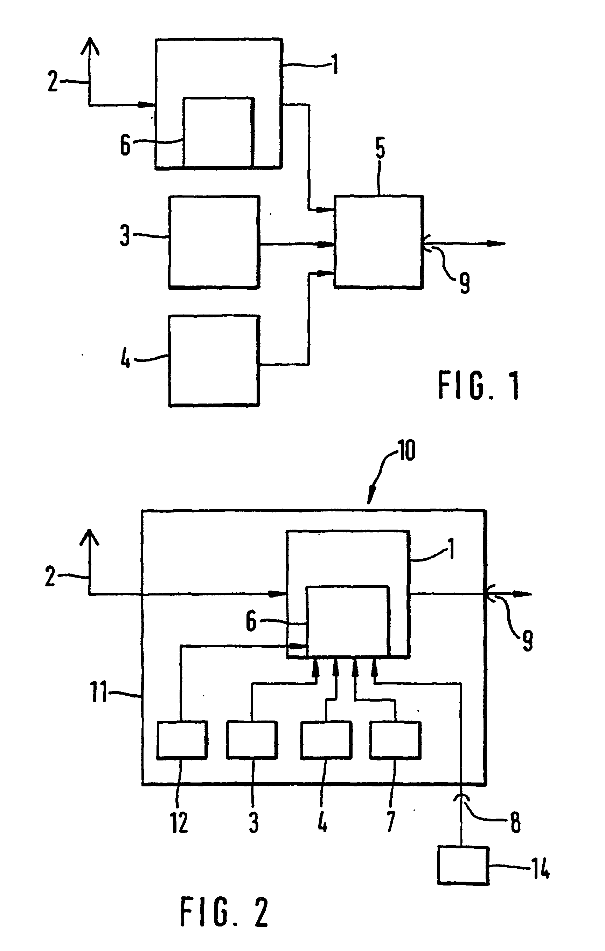

Figur 1 zeigt ein bekanntes Ortungssystem, das mit einem GPS-Empfänger 1, einem Magnetkompaß 3 als Richtungssensor und einem Wegsensor 4, beispielsweise mit Radsensoren an einem Kraftfahrzeug ausgebildet ist. Der GPS-Empfänger 1 hat dabei ein Positionsfilter 6 zur Bestimmung des Standortes aus den empfangenen Satellitensignalen. Die Signale dieser Sensoren sind mit einem Rechner 5 verbunden, an dessen Ausgang 9 die Position bzw. Standortdaten abgreifbar sind.

Der GPS-Empfänger 1 sowie die einzelnen Sensoren 3,4 und der Rechner 5 sind dabei in verschiedenen Gehäusen eingebaut, wobei die einzelnen Gehäuse an jeweils geeigneten Stellen des Kraftfahrzeugs befestigt sind.

Figur 2 zeigt ein erfindungsgemäßes Ausführungsbeispiels eines Ortungssensor 10, in dessen Gehäuse 11 der Satellitenempfänger 1 mit dem Richtungssensor 3, dem Richtungssensor 4 als kompakte Einheit angeordnet sind. Der Wegsensor ist beispielsweise als integrierender Drehratensensor (Gyrosensor) ausgebildet. Der Gyrosensor ist per se bekannt und muß daher nicht näher erläutert werden. Als Wegsensor 4 ist ein Beschleunigungsmesser vorgesehen, aus dessen Signalen durch Integration eine zurückgelegte Wegstrecke berechnet werden kann. Die Ausgänge dieser Sensoren sind auf ein Positionsfilter 6 geschaltet. Das Positionsfilter 6 ist vorzugsweise als Kalman-Filter ausgebildet.

Zur weiteren Verbesserung der Verfügbarkeit der Positionsdaten ist ein Temperatursensor 12 und/oder ein barometrischer Höhenmesser 7 vorsehbar. Auch deren Ausgänge sind mit dem Positionsfilter 6 verbunden. In weiterer Ausgestaltung der Erfindung ist ein Tachogeber 14 als Wegsensor vorgesehen, dessen Signale über einen externen Anschluß ebenfalls auf das Positionsfilter 6 geführt sind. Ergänzend ist noch eine Antenne 2 für den Satellitenempfänger 1 vorgesehen. Das Positionsfilter 6 berechnet aus den Signalen der einzelnen Sensoren die momentane Fahrzeugposition, die Fahrtrichtung und die zurückgelegte Wegstrecke und stellt diese Daten in einem kompatiblen Datenformat an einem Ausgang 9 zur Verfügung.

Beim Kalman-Filter handelt es sich um ein Optimalfilter, das aus der Systemdynamik, den stochastischen Kenndaten des Prozeß- und Meßrauschens und einer Anfangsinformation eine Schätzung des Systemzustands auf minimalem Schätzfehler liefert. Eine detailierte Beschreibung ist in "Introduction to Random Signals and Applied Filtering"; Robert Grover Brown, Patrick Y.C. Hwang; John Wiley & Sons, INC.; New York 1992 zu finden.

Im folgenden wird die Funktionsweise dieser Anordnung näher erläutert. Das Positionsfilter 6 ist derart ausgelegt, daß es die Signale aller angeschlossenen Sensoren und Signalgebern verarbeitet. Es ist als Kalman-Filter ausgebildet und kann die einzelnen fehlerbehafteten Signale der angeschlossenen Sensoren kompensieren, so daß mit größtmöglicher Wahrscheinlichkeit eine tatsächliche Standortposition ausgeben wird.

Da sowohl die Signale des Satellitenempfängers 1 als auch die Signale des Richtungs- und Wegsensors 3, 4 fehlerbehaftet sind, wobei sich insbesondere die Fehler des Richtungs- und des Wegsensors 3, 4, akkumulieren, wird versucht, mit Hilfe der erfindungsgemäßen Anordnung die Fehler zu minimieren, um eine möglichst zuverlässige Standortposition zu bestimmen. Ein wesentlicher Erfindungsgedanke ist dabei, daß die Signale der einzelnen Komponenten mit einem Prioritätsfaktor gewichtet werden. Die gewichteten Signale sind dann nach den Regeln der Koppelnavigation auswertbar. Sind beispielsweise genügend GPS-Satelliten empfangbar, dann enthält die Positionsbestimmung des Satellitenempfängers 1 die höchste Priorität, beispielsweise den Faktor 1, während der Richtungssensor 3 und der Wegsensor 4 den Faktor 0 erhalten. Wird bei schlechten Empfangsverhältnissen, beispielsweise in engbebauten Stadtgebieten oder in einem Tunnel der Satellitenempfang behindert, dann erhält der GPS-Empfänger 1 den niedrigsten Prioritätsfaktor, z. B. 0. Da das Positionsfilter 6 kontinuierlich parallel zu den Positionsdaten des Satellitenempfängers 1, die durch den Gyrosensor 3 und den Beschleunigungssensor 4 gewonnenen Positionsdaten mitkoppelt und vergleicht, kann somit die Fahrzeugposition auch dann, wenn keine GPS-Signale zur Verfügung stehen, ermittelt werden. In diesem Fall erhalten der Gyro-Sensor 3 und der Beschleunigungsmesser 4 die höchste Priorität, z. B. den Wert 1. Sobald genügend Satelliten wieder empfangbar sind, wird die letzte Position mit der vom Satellitenempfänger 1 bestimmten Position verglichen und gegebenenfalls korrigiert. Durch diese von der Empfangsqualität abhängige Wichtung des Prioritätsfaktors ergibt sich eine hohe Genauigkeit der Standortposition. Die einzelnen Sensoren 3, 4 überwachen sich somit gegenseitig, so daß es im einzelnen nicht so sehr auf die Genauigkeit des einzelnen Sensors selbst ankommt. Da der Gyrosensor 3 und der Beschleunigungssensor 4 nur für eine begrenzte Wegstrecke verwendet wird, sind vorteilhaft die akkumulierten Fehler dieser Sensoren ebenfalls begrenzt. Als Gyrosensor kann daher ein etwas ungenauerer und damit preiswerterer Konsumer-Gyrosensor eingesetzt werden, da dessen Daten erst dann gewichtet werden, wenn die präziseren Meßdaten des GPS-Empfängers 1 für die Berechnung der Positionsdaten nicht verfügbar sind.

Durch die Verwendung des Temperatursensors 12 und/oder des barometrischen Höhenmessers 7 kann eine weitere Optimierung für die Standortposition durchgeführt werden.

In weiterer Ausgestaltung der Erfindung ist vorgesehen, auch das Signal des Tachogebers 14 als Wegsensor zu verwenden. Bei Verwendung eines Beschleunigungssensors 4 ist vorgesehen, die Beschleunigung in den drei zueinander senkrechten Raumachsen zu erfassen, um aus dem komplexen Beschleunigungsvektor direkt die Weg- und Richtungsinformation zu gewinnen. In diesem Fall kann auf die Verwendung eines Gyrosensors zur Generierung der Richtungsinformation verzichtet werden.

Werden der Gyro-Sensor 3 und der Beschleunigungssensor 4 als mikromechanisches Bauelement vorzugsweise auf einem Halbleiterchip ausgeführt, dann können diese als integrierte Schaltung oder als Modul auf einer Platine in einer sehr raumsparenden Ausführung realisiert werden.

Durch das kompatible Daten-Ausgabeformat, ergibt sich der Vorteil, daß ein vorhandener GPS-Empfängers 1 ohne Mehraufwand durch den erfindungsgemäßen Ortungssensor 10 austauschbar ist.

## Patentansprüche

1. Ortungssensor mit einem Satellitenempfänger zur Positionsbestimmung, wobei im gleichen Gehäuse (11) wenigstens ein Richtungssensor (3) und ein Wegsensor (4) angeordnet sind, **dadurch gekennzeichnet, daß** der Satellitenempfänger (1) im gleichen Gehäuse (11) angeordnet ist, daß die Ausgangssignale des Richtungssensors (3) und des Wegsensors (4) auf ein Positionsfilter (6) des Satellitenempfängers (1) schaltbar sind, wobei die Signale dieser Baugruppen (1, 3, 4) mit einem Prioritätsfaktor gewichtet sind, wobei der Prioritätsfaktor in Abhängigkeit von der Verfügbarkeit der Signale gewichtet ist, und daß der Ortungssensor (10) derart ausgebildet ist, daß an einem Ausgang (9) des Ortungssensors (10) Daten für den Standort, die Bewegungsgeschwindigkeit und/oder die Bewegungsrichtung ausgebbar sind und daß die ausgebbaren Daten in einem kompatiblen Datenformat abgreifbar sind.

2. Ortungssensor nach Anspruch 1, **dadurch gekennzeichnet, daß** der Satellitenempfänger (1) zum Empfang von GPS-und/oder GLONASS-Satelliten ausgebildet ist.

3. Ortungssensor nach einem der vorherigen Ansprüche, **dadurch gekennzeichnet, daß** der Wegsensor (4) ein Beschleunigungssensor ist.

4. Ortungssensor nach einem der vorherigen Ansprüche, **dadurch gekennzeichnet, daß** der Richtungssensor (3) ein Drehratensensor (Gyro-Sensor) ist.

5. Ortungssensor nach einem der vorherigen Ansprüche, **dadurch gekennzeichnet, daß** im Gehäuse (11) ein barometrischer Höhenmesser (7) angeordnet ist, dessen Ausgang mit dem Positionsfilter (6) verbindbar ist.

6. Ortungssensor nach einem der Ansprüche, **dadurch gekennzeichnet, daß** im Gehäuse (11) ein Temperatursensor (12) angeordnet ist, dessen Ausgang mit dem Positionsfilter (6) verbindbar ist.

7. Ortungssensor nach einem der vorherigen Ansprüche, **dadurch gekennzeichnet, daß** an das Gehäuse (11) ein externer Sensor, vorzugsweise ein Tachogeber (14) anschließbar ist, dessen Signale über einen externen Anschluß auf das Positionsfilter (6) führbar sind.

8. Ortungssensor nach einem der vorherigen Ansprüche, **dadurch gekennzeichnet, daß** das Positionsfilter (6) ein Kalman-Filter ist.

9. Ortungssensor nach einem der vorherigen Ansprüche, **dadurch gekennzeichnet, daß** der Ortungssensor (10) in einem Navigationssystem, vorzugsweise für ein Kraftfahrzeug verwendbar ist.

10. Ortungssensor nach einem der vorhergehenden Ansprüche, **dadurch gekennzeichnet, daß** der Beschleunigungssensor (4) ausgebildet ist, die Beschleunigungen in drei Achsen zu erfassen.

## Claims

1. Position finding sensor comprising a satellite receiver for determining position, where at least one direction sensor (3) and a distance sensor (4) are arranged in the same housing (11), **characterized in that** the satellite receiver (1) is arranged in the same housing (11), **in that** the output signals of the direction sensor (3) and the distance sensor (4) can be connected to a position filter (6) of the satellite receiver (1), the signals of these modules (1, 3, 4) being weighted with a priority factor, the priority factor being weighted in dependence on the availability of the signals, and **in that** the position finding sensor (10) is constructed in such a manner that data for the location, the speed of movement and/or the direction of movement can be output at an output (9) of the position finding sensor (10) and **in that** the data which can be output can be picked up in a compatible data format.

2. Position finding sensor according to Claim 1, **characterized in that** the satellite receiver (1) is constructed for receiving GPS and/or GLONASS satellites.

3. Position finding sensor according to one of the preceding claims, **characterized in that** the distance sensor (4) is an acceleration sensor.

4. Position finding sensor according to one of the preceding claims, **characterized in that** the direction sensor (3) is a gyro sensor.

5. Position finding sensor according to one of the preceding claims, **characterized in that** in the housing (11) a barometric altimeter (7) is arranged, the output of which can be connected to the position filter (6).

6. Position finding sensor according to one of the claims, **characterized in that** in the housing (11) a temperature sensor (12) is arranged, the output of which can be connected to the position filter (6).

7. Position finding sensor according to one of the preceding claims, **characterized in that** an external sensor, preferably a tachometer (14) can be connected to the housing (11), the signals of which tachometer can be conducted to the position filter (6) via an external connection.

8. Position finding sensor according to one of the preceding claims, **characterized in that** the position filter (6) is a Kalman filter.

9. Position finding sensor according to one of the preceding claims, **characterized in that** the position finding sensor (10) can be used in a navigation system, preferably for a motor vehicle.

10. Position finding sensor according to one of the preceding claims, **characterized in that** the acceleration sensor (4) is constructed for detecting the accelerations in three axes.

## Revendications

1. Détecteur de position comprenant un récepteur satchite pour déterminer une position, un même boîtier (11) comportant au moins un capteur de direction (3) et un capteur de trajet (4),
**caractérisé en ce que**
le récepteur satellite (1) est logé dans le même boîtier (11).
les signaux de sortie du capteur de direction (3) et ceux du capteur de trajet (4) sont appliqués à un filtre de position (6) du récepteur satellite (1),
les signaux de ces ensembles (1, 3, 4) sont pondérés par un coefficient de priorité et le coefficient de priorité est pondéré selon la disponibilité des signaux et
le détecteur de position (10) est réalisé de façon que sa sortie (9) fournisse des données concernant la position, la vitesse de déplacement et/ou la direction de déplacement et
les données émises sont disponibles dans un format de données, compatible.

2. Détecteur de position selon la revendication 1,
**caractérisé en ce que**
le récepteur satellite (1) est conçu pour la réception des satellites GPS et/ou GLONASS.

3. Détecteur de position selon l'une quelconque des revendications précédentes,
**caractérisé en ce que**
le capteur de trajet (4) est un capteur d'accélération.

4. Détecteur de position selon l'une quelconque des revendications précédentes,
**caractérisé en ce que**
le capteur de direction (3) est un capteur à fils tournants (capteur gyroscopique).

5. Détecteur selon l'une quelconque des revendications précédentes,
**caractérisé en ce que**
le boîtier (11) comporte un altimètre barométrique (7) dont la sortie est reliée au filtre de position (6).

6. Détecteur selon l'une quelconque des revendications précédentes,
**caractérisé en ce que**
le boitier (11) comporte un capteur de temperature (12) dont la sortie est reliée au filtre de position (6).

7. Détecteur selon l'une quelconque dés revendications précédentes,
**caractérisé en ce que**
le boîtier (11) peut être relié à un capteur externe, de préférence un capteur tachymétrique (14) dont les signaux sont fournis au filtre de position (6) par un branchement externe.

8. Détecteur selon l'une quelconque des revendications précédentes,
**caractérisé en ce que**
le filtre de position (6) est un filtre Kalman.

9. Détecteur selon l'une quelconque des revendications précédentes,
**caractérisé en ce que**
le détecteur de position (10) est appliqué a un système de navigation, de préférence pour un véhicule automobile.

10. Détecteur de position selon l'une quelconque des revendications précédentes,
**caractérisé, en ce que**
le capteur d'accélération (4) est conçu pour détecter les accélérations suivant les trois axes.
